# FASCICULE DE BREVET EUROPEEN

(11) **EP 3 833 526 B1**
(45) Date de publication et mention de la délivrance du brevet: **07.09.2022**
(21) Numéro de dépôt: 19761916.6
(22) Date de dépôt: 23.07.2019
(51) Int. Cl.: B29C 49/42, B29C 49/06, B29K 67/00, B29L 31/00

(54) **DISPOSITIF D'ALIMENTATION DE PRÉFORMES COMPORTANT DES ÉLÉMENTS DE GUIDAGE RÉGLABLES EN POSITION**
VORRICHTUNG ZUM ZUFÜHREN VON VORFORMLINGEN MIT FÜHRUNGSELEMENTEN MIT VARIABLER POSITION
DEVICE FOR FEEDING PREFORMS HAVING VARIABLE-POSITION GUIDE ELEMENTS

(30) Priorité: 09.08.2018 FR 1857416
(43) Date de publication de la demande: 16.06.2021
(73) Titulaire: Sidel Participations, 76930 Octeville-sur-Mer (FR)
(72) Inventeur: SALOMON, Gautier, 76930 Octeville-sur-mer (FR)
(74) Mandataire: Sidel Group
(86) Numéro de dépôt international: PCT/FR2019/051828
(87) Numéro de publication internationale: WO 2020/030865

(56) Documents cités:
- EP-A1- 1 335 870
- US-A1- 2015 101 909
- US-B1- 6 368 027

## Description

### DOMAINE TECHNIQUE DE L'INVENTION

L'invention concerne un dispositif d'alimentation de préformes, notamment de préformes en matériau thermoplastique destinées à être conformées en récipients, adapté pour des préformes comportant une collerette, le dispositif comportant une glissière de défilement des préformes comportant deux chemins de glissement destiné à supporter les préformes debout par leur collerette, la glissière comportant :
- un bâti fixe ;
- des éléments de guidage des préformes montés réglables en position sur le bâti pour être adaptés à différents formats de préforme.

### ARRIERE PLAN TECHNIQUE DE L'INVENTION

Le dispositif d'alimentation est destiné à être mis en oeuvre dans une installation de soufflage de récipients en matériau thermoplastique, tel que du polyéthylène téréphtalate (PET).

Selon une technique bien connue, de tels récipients sont produits en deux étapes principales. Dans une première étape, on procède au moulage par injection d'une préforme en matériau thermoplastique. Cette préforme comporte un corps sensiblement tubulaire qui est fermé à l'une de ses extrémités axiales. Son autre extrémité présente, dès cette opération de moulage par injection, la forme définitive du col du récipient. Généralement, le col du récipient comporte un filetage et, à sa base, une collerette de support annulaire qui s'étend radialement en saillie vers l'extérieur par rapport au col et par rapport au col.

Il existe des machines dans lesquelles les préformes sont directement transmises vers la machine de soufflage juste après leur moulage par injection, chaque préforme étant transportée individuellement.

Toutefois, dans de nombreux cas, les préformes sont fabriquées par injection en un premier endroit et sont moulées par soufflage à la forme définitive du récipient en un second endroit sur une machine de soufflage spécifique. Une telle technologie permet de procéder à l'opération de moulage par soufflage le plus près possible du lieu d'embouteillage, l'opération d'injection pouvant être effectuée en n'importe quel endroit. En effet, il est relativement aisé et peu coûteux de transporter des préformes, tandis que transporter des récipients après soufflage présente l'inconvénient d'être économiquement peu rentable du fait du volume très important des récipients.

Dans le cas où la machine d'injection et la machine de soufflage sont deux machines totalement indépendantes, la machine de soufflage dispose d'un dispositif d'alimentation en préformes qui est équipé d'un système de démêlage et d'alignement des préformes.

Dans un tel système, les préformes sont déversées en vrac dans un bac. Elles sont prélevées de ce bac par un tapis élévateur qui, à son tour, vient déverser les préformes, selon un rythme préétabli, à l'extrémité supérieure de rouleaux orienteurs, aussi appelés rouleaux d'alignement. Ces deux rouleaux d'alignement sont inclinés par rapport à l'horizontale et ils sont sensiblement parallèles l'un à l'autre. Les deux rouleaux sont entraînés en rotation selon des sens opposés, et sont écartés l'un de l'autre de manière à laisser subsister un intervalle qui est de dimension légèrement supérieure à la dimension des corps des préformes, mais de dimension inférieur au diamètre externe de la collerette de support située à la base du col.

Les rouleaux orienteurs sont configurés de telle manière que, sous l'effet de la gravité, les préformes sont forcées entre les deux rouleaux. Ainsi, par simple gravité, chaque préforme tend à se disposer entre les deux rouleaux, de manière à être suspendue par sa collerette entre les rouleaux. Le mouvement de rotation contraire des deux rouleaux assure le placement des préformes debout les unes derrière les autres, et l'inclinaison des rouleaux assure le glissement des préformes le long de l'axe des rouleaux, vers le bas des rouleaux orienteurs où elles sont ensuite récupérées dans une glissière de défilement elle-même reliée à l'installation de soufflage.

La glissière de défilement des préformes comporte une fente longitudinale qui est délimitée transversalement par deux rails parallèles.

Dans la glissière de défilement, les préformes s'accumulent en une file continue. Normalement, chaque préforme tend à se disposer debout dans la glissière, entre les deux rails parallèles, de manière à être suspendue par sa collerette sur les rails.

La glissière de défilement est configurée de manière que seules les préformes parfaitement positionnées soient autorisées à glisser vers le bas. A cet effet, les rails de la glissière comportent de nombreux éléments de guidage qui permettent d'assurer que seules les préformes bien positionnées puisse défiler. De plus, ces éléments de guidage permettent de garantir que les préformes reçues dans la glissière conserve un positionnement correct jusqu'à leur arrivée en bas de la glissière.

A cet effet, les différents éléments de guidage doivent être parfaitement ajustés par rapport aux dimensions de la préforme.

Les installations de fabrication de récipients sont conçues pour pouvoir recevoir des préformes de différents formats. A cet effet, les éléments de guidage sont montés réglables en position sur la glissière. Lors d'un changement de format de préforme, de nombreux réglages doivent être effectués, notamment pour permettre d'ajuster les éléments de guidage aux dimensions du nouveau modèle de préforme.

Une telle opération de réglage est généralement très chronophage. De plus, une erreur de réglage peut avoir pour conséquence un arrêt de l'installation le temps de rectifier la position des différents éléments de réglage.

US 2015101909A1 divulgue un système pour régler au moins le réglage vertical entre un premier dispositif de transport et un deuxième dispositif de transport dans une section de transport pour préformes pour récipients en plastique.

### BREF RESUME DE L'INVENTION

L'invention propose un dispositif d'alimentation de préformes, notamment de préformes en matériau thermoplastique destinées à être conformées en récipients, adapté pour des préformes comportant une collerette, le dispositif comportant une glissière de défilement des préformes comportant deux chemins de glissement destiné à supporter les préformes debout par leur collerette, la glissière comportant :
- un bâti fixe ;
- des éléments de guidage des préformes montés réglables en position sur le bâti pour être adaptés à différents formats de préforme ;
caractérisé en ce que les éléments de guidage sont montés réglables sur la bâti par l'intermédiaire de platines de support associées, les platines de support étant fixées dans une position de référence sur le bâti par des moyens de fixation démontables pour permettre de détacher les éléments de guidage du bâti par démontage des platines de support tout en conservant leur réglage en position par rapport aux platines de support.

Selon d'autres caractéristiques de l'invention :
- les moyens de fixation démontables des platines de support sur le bâti sont formés par des attaches rapides ;
- la glissière comporte une fente délimitée transversalement par deux rails parallèles de guidage, chaque rail de guidage comportant un guide sous col, formant l'un desdits éléments de guidage, qui comporte un des chemins de glissement, le guide sous col étant monté réglable transversalement sur la platine de support par l'intermédiaire de premiers moyens de fixation réglables ;

- chaque rail de guidage comporte un guide corps, formant l'un desdits éléments de guidage, qui est agencé sous le guide sous col pour guider un corps des préformes et qui est monté réglable transversalement sur le guide sous col par l'intermédiaire de deuxièmes moyens de fixation réglables ;
- chaque rail de guidage comporte un guide col, formant l'un desdits éléments de guidage, qui est agencé sur le guide sous col pour guider un col des préformes et qui est monté réglable transversalement sur le guide sous col par l'intermédiaire de troisièmes moyens de fixation ;
- le dispositif comporte aussi au moins un guide buvant, formant l'un desdits éléments de guidage, qui est agencée au droit de la glissière pour maintenir les préformes debout dans la glissière, le guide buvant étant montée réglable verticalement sur des platines de support par l'intermédiaire de quatrièmes moyens de fixation réglables, les platines de support étant fixées dans une position de référence sur le bâti au moyen d'attaches rapides ;
- les attaches rapides sont formés par emboîtement d'éléments de forme complémentaire comportant un mécanisme de verrouillage à billes ;
- le mécanisme de verrouillage à billes comporte un poussoir de déverrouillage ;
- les attaches rapides sont formées par des mécanismes de genouillère ;
- au moins un des moyens de fixation réglables est formé par une vis de serrage reçue dans une lumière de réglage, la vis de serrage comportant une empreinte de coopération avec une clé de réglage ;
- chaque rail de guidage est formé de plusieurs tronçons indépendants qui sont chacun portés par des platines de support associées.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique de profil qui représente un dispositif d'alimentation de préformes comportant une glissière de défilement réalisée selon les enseignements de l'invention ;
- la figure 2 est une vue schématique de profil qui représente une préforme susceptible d'être prise en charge par le dispositif d'alimentation de la figure 1 ;
- la figure 3 est une vue en perspective qui représente une glissière d'alimentation réalisée selon les enseignements de l'invention dans laquelle les rails de guidage des préformes et le guide buvant sont montés sur le bâti ;
- la figure 4 est une vue en perspective similaire à celle de la figure 3 dans laquelle le guide buvant est absent et dans laquelle les rails de guidage sont représentés démontés par rapport au bâti ;
- la figure 5 est une vue en perspective de dessus qui représente les rails de guidage des préformes montés réglés en position sur leurs platines de support et qui sont destinés à être montés sur le bâti de la glissière de défilement ;
- la figure 6 est une vue en coupe transversale verticale selon le plan de coupe 6-6 de la figure 5 ;
- la figure 7 est une vue en coupe transversale verticale selon le plan de coupe 7-7 de la figure 5 ;
- la figure 8 est une vue en coupe transversale verticale selon le plan de coupe 8-8 de la figure 5 ;
- la figure 9 est une vue similaire à celle de la figure 4 qui représente le guide buvant démonté par rapport au bâti, les rails de guidage étant montés sur le bâti ;
- la figure 10 est une vue en perspective qui représente le guide buvant monté réglé en position sur ses platines de support et qui destiné à être monté sur le bâti de la glissière de défilement ;
- la figure 11 est une vue en coupe axiale selon le plan de coupe 11-11 de la figure 3 qui représente les attaches rapides des platines en position montée sur le bâti.

### DESCRIPTION DETAILLEE DES FIGURES

Dans la suite de la description, des éléments présentant une structure identique ou une fonction analogue seront désignés par une même référence.

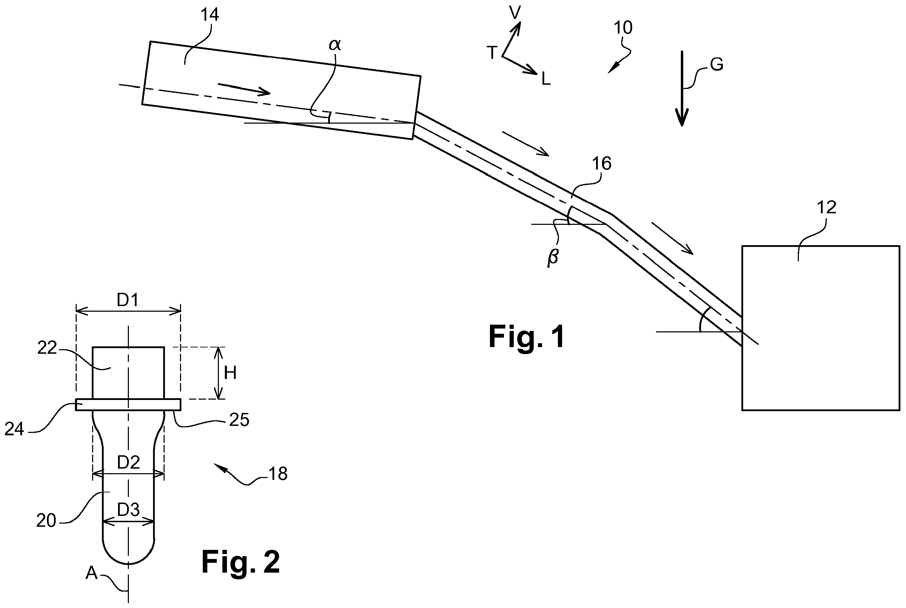

Dans la suite de la description, on adoptera à titre non limitatif des orientations longitudinale, verticale et transversale indiquées par le trièdre "L,V,T" des figures. La direction verticale est ici utilisée à titre de repère géométrique orienté perpendiculairement à l'axe longitudinal de la glissière de défilement. La direction de la gravité est indiquée par la flèche "G" de la figure 1. Comme cela est indiqué en début de description, la glissière étant incliné d'un angle déterminé par rapport à un plan horizontal, la direction verticale est ici inclinée du même angle par rapport à la direction de la gravité.

Dans la suite de la description, le terme "intérieur" sera utilisé pour qualifier une face ou un déplacement dirigé transversalement vers la fente 27 centrale de la glissière 16 de défilement, tandis que le terme "extérieur" qualifiera une direction opposée.

On a représenté à la figure 1 de manière très schématique un dispositif 10 d'alimentation de préformes destiné par exemple à alimenter en préformes 18 une installation 12 de soufflage. Le dispositif 10 d'alimentation comporte des rouleaux 14 orienteurs supérieurs entre lesquels des préformes 18 sont déversées en vrac selon un débit déterminé par des moyens non représentés.

Dans les rouleaux 14 orienteurs, les préformes 18 sont orientées col en haut et sont alignées en une file de manière à être ensuite délivrées à une glissière 16 de défilement qui transporte les préformes 18 jusqu'à l'installation 12 de soufflage. Un exemple de tels rouleaux 14 orienteurs est décrit en détails dans le document EP-A1-1.335.870. Des préformes 18 sont ainsi reçues dans la glissière 16 de défilement

Les rouleaux 14 orienteurs présentent une pente d'inclinaison "a" déterminée, par exemple de 12° par rapport à l'horizontale, pour permettre aux préformes 18 de glisser jusqu'à l'entrée de la glissière 16 de défilement située en contrebas sous l'effet de la gravité, tandis que la glissière 16 de défilement présente une pente "β" d'inclinaison plus importante, par exemple de 15°.

Comme cela est représenté à la figure 2, chaque préforme 18 alimentant l'installation 12 de soufflage présente un corps 20 tubulaire d'axe "A" qui est fermé à son extrémité inférieure. Le corps 20 est ouvert axialement vers le haut par l'intermédiaire d'un col 22 cylindrique qui prolonge le corps 20 vers le haut. Le col 22 présente, à sa jonction avec le corps 20, une collerette 24 qui s'étend radialement en saillie par rapport au tronçon cylindrique du col 22 et par rapport au corps 20. La collerette 24 comporte une face 25 inférieure annulaire qui présente un bord externe libre de diamètre externe "D1". Un bord interne de la face 25 inférieure à l'intersection avec le corps 20 présente un diamètre interne, appelé par la suite diamètre "D2" sous col. Le corps 20 présente en outre, à distance au-dessous de la collerette 24, un diamètre "D3". Enfin, le col 22 présente une hauteur "H" axiale déterminée.

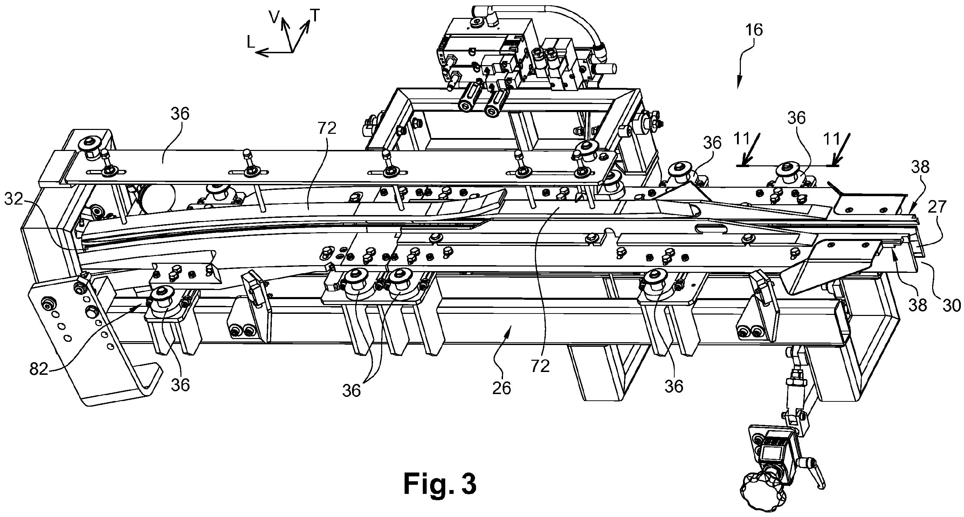

L'invention concerne la glissière 16 de défilement des préformes 18. Comme cela est visible à la figure 3, la glissière 16 de défilement comporte un bâti 26 fixe par rapport au sol.

La glissière 16 de défilement comporte une fente 27 longitudinale qui s'étend depuis une entrée 30 jusqu'à une sortie 32 de la glissière 16 de défilement. La sortie 32 de la glissière 16 de défilement est située en contrebas de l'entrée 30 pour permettre aux préformes 18 de glisser vers la sortie 32 sous l'effet de la gravité.

La fente 27 est délimitée transversalement par deux chemins 34 de glissement destinés à supporter la préforme 18 debout par sa collerette 24. La préforme 18 est plus particulièrement suspendue entre les deux chemins 34 de glissement par sa collerette 24.

La glissière 16 de défilement comporte en outre des éléments de guidage des préformes 18. Comme cela sera expliqué plus en détail par la suite, les éléments de guidage sont ici formés par au moins un guide 40 sous col et/ou au moins un guide 52 corps et/ou au moins un guide 62 col et/ou au moins un guide 72 buvant.

Ces éléments de guidage sont montés réglables en position sur le bâti 26 par des moyens de fixation réglables pour être adaptés à différents formats de préforme 18. Il est en effet important que les éléments de guidage soient réglés au plus près des préformes 18 pour garantir que les préformes 18 occupent une position parfaitement adaptée à l'alimentation de l'installation 12 de soufflage à la sortie 32 de la glissière 16 et pour garantir que les préformes 18 ne se bloquent pas dans la glissière 16 pendant leur défilement.

Le réglage en position des différents éléments de guidage doit être réalisé de manière minutieuse afin d'éviter des blocages de préformes lors de leur glissement le long des éléments de guidage. Cette opération est extrêmement chronophage.

En outre, on a constaté que de nombreux fabricants de récipients utilisent un nombre limité de modèles de préformes 18. Or, même lorsque le réglage a déjà été réalisé pour un modèle de préforme déterminé, il est difficile de retrouver ce réglage de manière répétable.

L'invention propose d'équiper la glissière 16 de défilement de platines 36 de support qui sont fixées dans une position de référence sur des emplacements 37 de référence associés du bâti 26. Cela signifie que la position des platines 36 de support n'est pas réglable par rapport au bâti 26. Ainsi, on est assuré que chaque platine 36 de support occupe ladite position de référence lorsqu'elle est remontée sur le bâti 26 après avoir été démontée.

Chaque élément de guidage des préformes 18 est monté réglable sur le bâti 26 par l'intermédiaire d'au moins une platine 36 de support associée. Chaque platine 36 de support est ainsi destinée à supporter au moins un élément de guidage des préformes 18. Chaque élément de guidage est fixé de manière réglable en position par rapport à la platine 36 de support par des moyens de fixation réglables associés.

Pour permettre un remplacement rapide des platines 36 de support et des éléments de guidage associés, chaque platine 36 de support est en outre fixée au bâti 26 au moyen d'attaches 82 rapides. Ces attaches 82 rapides sont aussi connues sous leur dénomination anglaise de "quick release fastener" ou encore "snap lock". Une telle attache 82 rapide permet le montage et le démontage des platines 36 de support avec une économie de geste et sans recourir à des outils.

Les éléments de guidage étant fixés de manière réglables sur le bâti 26 par l'intermédiaire des platines 36 de support, les éléments de guidage peuvent être retirés du bâti 26 par démontage rapide des platines 36 de support tout en conservant leur réglage en position par rapport aux platines 36 de support pour un modèle spécifique de préforme 18. Lorsque ledit modèle de préforme 18 est à nouveau traité par l'installation 12 de soufflage, les éléments de guidage et leur platine 36 de support peuvent de nouveau être montés sur le bâti 26 avec le réglage adapté sans requérir une nouvelle opération de réglage.

Dans l'exemple représenté aux figures, la glissière 16 de défilement comporte deux groupes d'éléments de guidage.

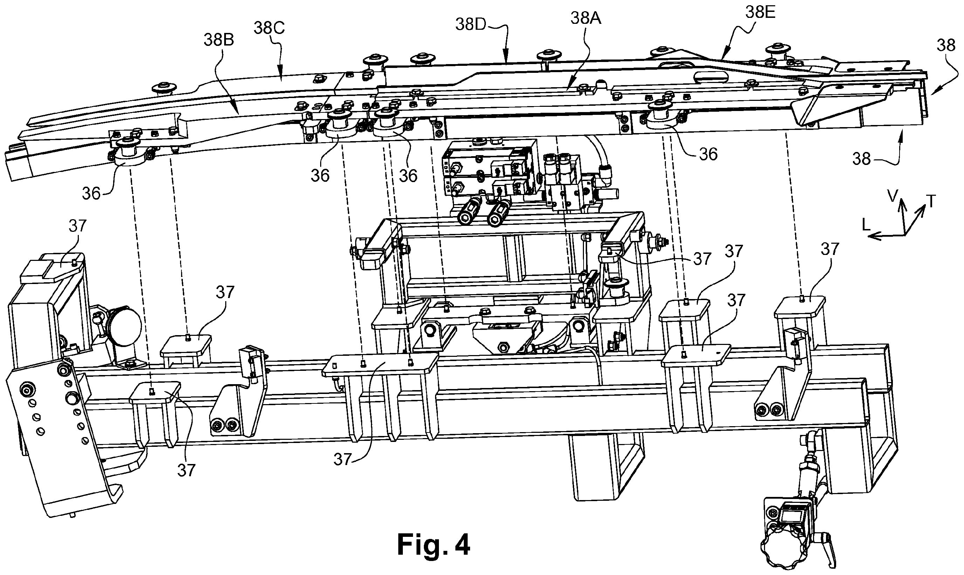

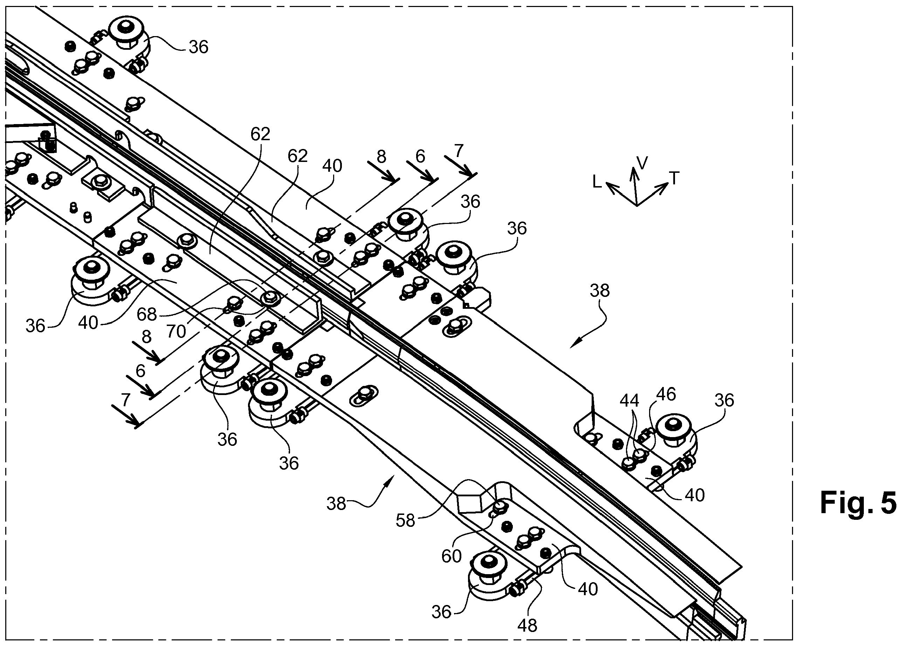

Comme représenté aux figures 4 et 5, un premier groupe d'éléments de guidage est formé par deux rails 38 de guidage parallèles qui s'étendent longitudinalement de part et d'autre de la fente 27.

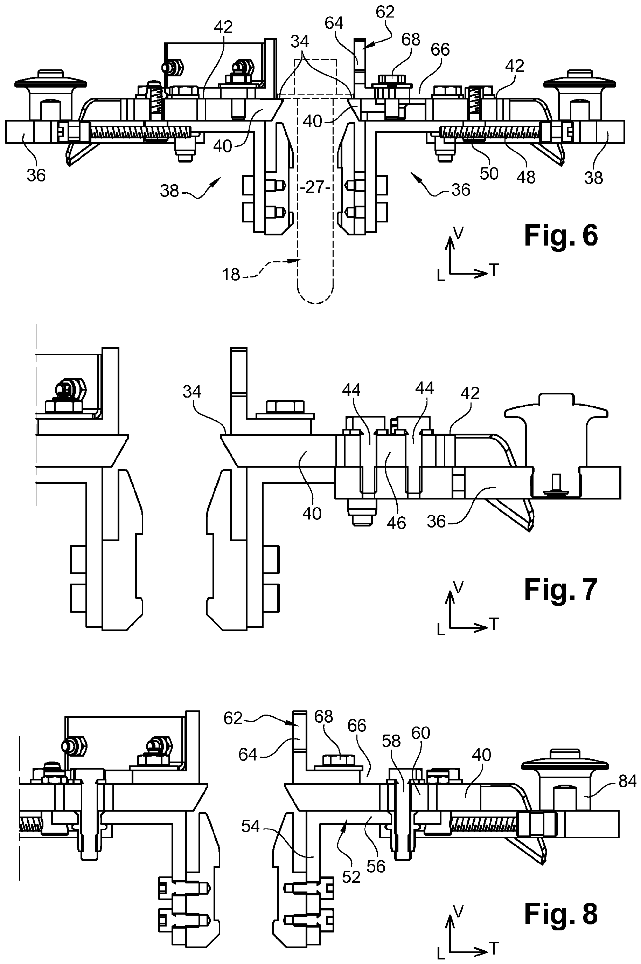

Comme cela est particulièrement visible aux figures 6 et 7, chaque rail 38 de guidage comporte un premier élément de guidage formé par un guide 40 sous col. Le guide 40 sous col se présente sous la forme d'une plaque horizontale. Le guide 40 sous col comporte le chemin 34 de glissement qui est formé sur un rebord longitudinal intérieur d'une face 42 supérieure du guide 40 sous col. Le chemin 34 de glissement est destiné à supporter les préformes 18 par leur collerette 24. Le guide 40 sous col est monté réglable transversalement sur des platines 36 de support associées par l'intermédiaire de premiers moyens de fixation réglables. Le guide 40 sous col de chaque rail 38 de guidage est ici divisé en deux ou trois tronçons indépendants pour faciliter le remplacement des rails 38 de guidage. Les deux extrémités longitudinales de chaque tronçon de guide 40 sous col sont chacune fixées de manière réglable à une platine 36 de support associée.

Comme cela est représenté aux figures 5 et 7, chaque guide 40 sous col est plus particulièrement monté coulissant transversalement sur les platines 36 de support associées par l'intermédiaire de vis 44 de serrage d'axe vertical qui sont reçues dans des lumières 46 oblongues longitudinales du guide 40 sous col. Une extrémité libre des vis 44 de serrage est reçue dans un taraudage complémentaire de la platine 36 de support. Ainsi, lorsque les vis 44 de serrage sont desserrées, la platine 36 de support est susceptible de coulisser transversalement par rapport aux vis 44 de serrage qui sont fixées dans la platine 36 de support. Lorsque les vis 44 de serrage sont serrées, le guide 40 sous col est bloqué dans sa position réglée par serrage entre une tête des vis 44 de serrage et une face supérieure de la platine 36 de support.

En outre, pour permettre un réglage très précis de la position transversale du guide 40 sous col par rapport à la platine 36 de support, la platine 36 de support comporte une vis 48 de réglage d'axe transversal à tête captive qui est uniquement susceptible de tourner autour de son axe par rapport à la platine 36 de support, comme cela est visible aux figures 5 et 6. Une tige filetée de la vis 48 de réglage est reçue dans un écrou 50 de réglage qui est solidaire en déplacement transversal avec le guide 40 sous col. Ainsi, en tournant les vis 48 de réglage, il est possible d'ajuster précisément la position transversale du guide 40 sous col par rapport à la platine 36 de support lorsque les vis 44 de serrage sont desserrées.

En outre, l'écrou 50 de réglage est ici monté réglable en position verticale par rapport au guide 40 sous col pour permettre d'ajuster l'assiette et l'altitude du guide 40 sous col par rapport à la platine 36 de support.

En outre, chaque rail 38 de guidage comporte aussi un deuxième élément de guidage formé par guide 52 corps qui est agencé sous le guide 40 sous col associé. Ce guide 52 corps est destiné à éviter que le corps 20 des préformes 18 ne se balance transversalement entre les rails 38 de guidage.

Pour permettre d'adapter la largeur de l'espace transversal réservé entre deux guides 52 corps de part et d'autre de la fente 27, il est prévu de monter le guide 52 corps réglable transversalement sur le guide 40 sous col par l'intermédiaire de deuxièmes moyens de fixation réglables. Chaque guide 52 corps présente un panneau 54 vertical longitudinal de guidage qui s'étend verticalement vers le bas depuis une face inférieure du guide 40 sous col et une patte 56 de fixation horizontale qui s'étend transversalement vers l'extérieur depuis un bord d'extrémité supérieure du panneau 54 de guidage.

Comme cela est particulièrement visible aux figures 5 et 8, les deuxièmes moyens de fixation réglables sont formés par des vis 58 de serrage d'axe vertical qui sont reçues dans une lumière 60 oblongue étendue transversalement du guide 40 sous col. Une extrémité filetée de la vis 58 de serrage est reçue dans un taraudage associé de la patte 56 de fixation du guide 52 corps, tandis qu'une tête de la vis de serrage s'étend au-dessus du guide 40 sous col. Ainsi, le déplacement transversal du guide 52 corps par rapport au guide 40 sous col est guidé par le coulissement transversal de la tige de la vis 58 de serrage dans la lumière 60 oblongue. Lorsque la position transversale du guide 52 corps a été réglée par rapport au guide 40 sous col, les vis 58 de serrage sont serrées pour permettre de bloquer le guide 52 corps en position réglée par rapport au guide 40 sous col par serrage entre la tête de la vis 58 de serrage et la patte 56 de fixation du guide 52 corps.

Chaque guide 52 corps est aussi divisé en deux ou trois tronçons dont chacun est associé à un tronçon de guide 40 sous col.

Chaque rail 38 de guidage comporte aussi un troisième élément de guidage formé par un guide 62 col qui est agencé sur le guide 40 sous col. Les guides 62 col ont pour fonction de délimiter transversalement le chemin 34 de glissement vers l'extérieur. Ceci permet notamment d'éviter que les préformes 18 ne se déplacent transversalement dans la fente 27 pendant leur défilement. Le guide 62 col se présente ici sous la forme d'une équerre comportant une aile 64 verticale longitudinale de guidage qui s'étend verticalement vers le haut depuis le chemin 34 de glissement, et une aile 66 de fixation horizontale inférieure qui s'étend transversalement vers l'extérieur depuis le bord inférieure de l'aile 64 de guidage.

Le guide 62 col est monté réglable transversalement sur le guide 40 sous col par l'intermédiaire de troisièmes moyens réglables de fixation. Comme cela est représenté à la figure 5, les troisièmes moyens de fixation réglables sont formés par des vis 68 de serrage d'axe vertical qui sont reçues dans une lumière 70 oblongue de l'aile 66 de fixation du guide 62 col. Une extrémité filetée de la vis 68 de serrage est reçue dans un taraudage associé du guide 40 sous col, tandis qu'une tête de la vis 68 de serrage s'étend au-dessus de l'aile 66 de fixation du guide 62 col. Ainsi, le déplacement transversal du guide 62 col par rapport au guide 40 sous col est guidé par le coulissement transversal de la tige de la vis 68 de serrage dans la lumière 70 oblongue. Lorsque la position transversale du guide 62 col a été réglée par rapport au guide 40 sous col, les vis 68 de serrage sont serrées pour permettre de bloquer le guide 62 col en position réglée par rapport au guide 40 sous col par serrage de l'aile 66 de fixation du guide 62 col entre la tête de la vis 68 de serrage et le guide 40 sous col.

Chaque guide 62 col est aussi divisé en deux ou trois tronçons dont chacun est associé à un tronçon de guide 40 sous col.

Comme cela est illustré à la figure 4, l'un des rails 38 de guidage est ainsi formé de deux tronçons 38A, 38B indépendants tandis que l'autre rail 38 de guidage est formé de trois tronçons 38C, 38D, 38E indépendants. Chaque tronçon 38A à 38E est porté par deux platines 36 de support associées agencées à ses extrémités longitudinales. Ceci permet de simplifier la manutention des éléments de support lors d'un changement de préforme 18 comme cela sera expliqué par la suite.

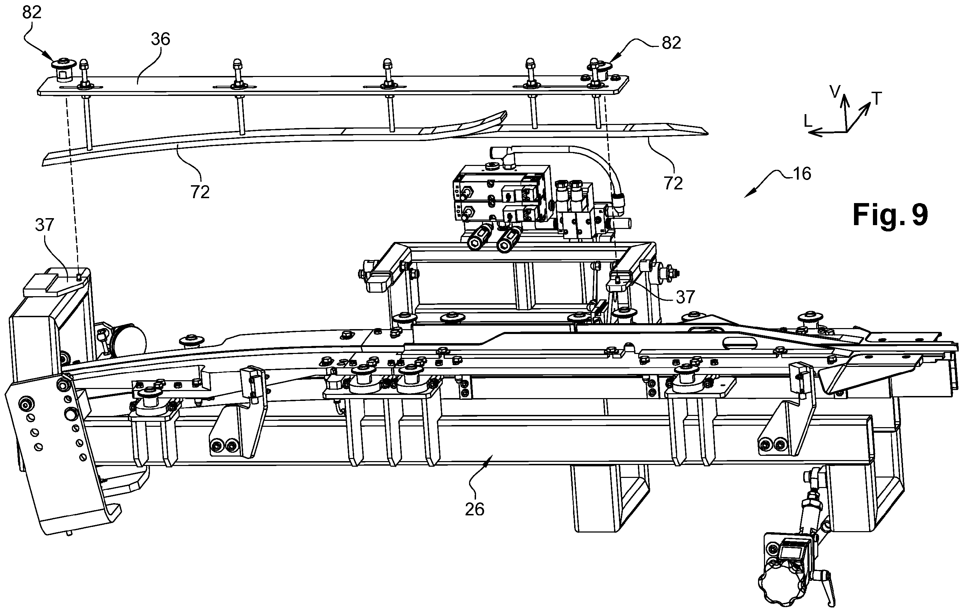

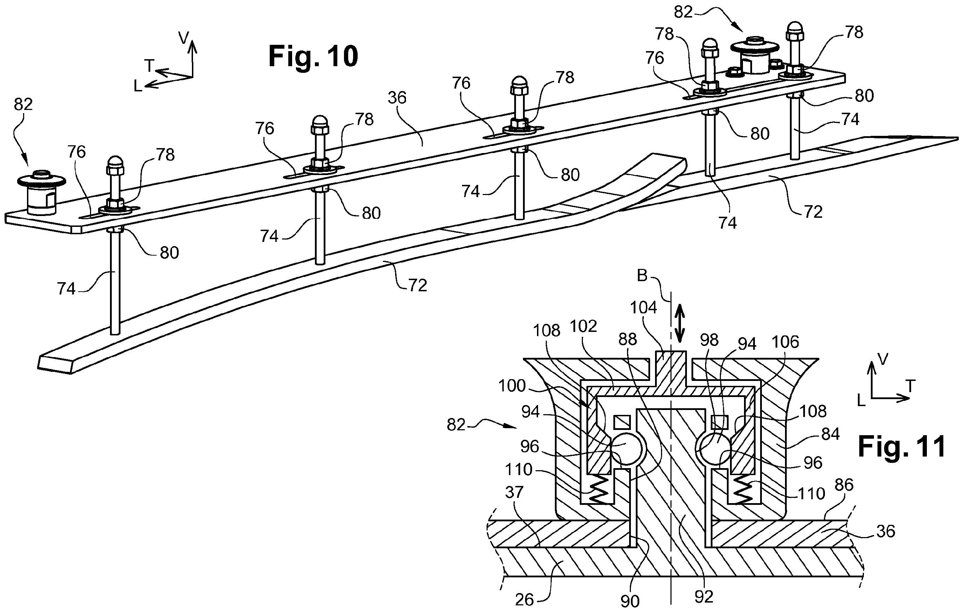

Un deuxième groupe d'éléments de guidage est formé par au moins un guide 72 buvant. Comme cela est représenté aux figures 9 et 10, le guide 72 buvant est formé par une plaque longitudinale transversale de guidage qui est agencée au droit de la glissière 16 de défilement pour maintenir les cols 22 des préformes 18 debout dans la glissière 16 de défilement. Le guide 72 buvant est monté réglable verticalement en position sur le bâti 26 par l'intermédiaire de quatrièmes moyens de fixation réglables. Ainsi, il est possible d'adapter la hauteur du guide 72 buvant par rapport à la hauteur "H" du col 22 de manière que le guide 72 buvant soit situé au plus proche de l'extrémité supérieure du col 22 des préformes 18 tout en permettant leur défilement.

Le guide 72 buvant est montée sur le bâti 26 par l'intermédiaire d'une platine 36 de support associée pour permettre de détacher le guide 72 buvant du bâti 26 par démontage rapide de la platine 36 de support tout en conservant son réglage en position par rapport aux platines 36 de support.

Plus particulièrement, la platine 36 de support est formée par une plaque longitudinale verticale qui est agencée à distance au-dessus des rails 38 de guidage. A cet effet, la platine 36 de support repose ici sur des emplacements 37 de référence agencés en hauteur par rapport aux emplacements 37 de référence des platines 36 de support du rail 38 de guidage.

Le guide 72 buvant est monté réglable verticalement entre la platine 36 de support et les rails 38 de guidage par l'intermédiaire de tiges 74 de suspension qui sont reçues dans des orifices 76 de la platine 36 de support. Une extrémité inférieure des tiges 74 de suspension est fixée au guide 72 buvant tandis qu'une extrémité supérieure des tiges 74 de suspension faisant saillie au-dessus de la platine 36 de support est munie d'un écrou 78 qui permet de régler la hauteur du guide 72 buvant. Un contre-écrou 80 situé juste au-dessous de la platine 36 de support permet d'immobiliser verticalement le guide 72 buvant par rapport à la platine 36 de support par serrage lorsque le guide 72 buvant est réglé en position.

En outre, le guide 72 buvant est réglable en position longitudinale par rapport à la platine 36 de support. A cet effet, les orifices 76 de la platine 36 de support présentent une forme allongée longitudinalement pour permettre de guider le guide 72 buvant en coulissement longitudinal par rapport à la platine 36 de support.

Toutes les platines 36 de support sont fixées de manière démontable au bâti 26 par l'intermédiaire d'attaches 82 rapides. Chaque platine 36 de support d'un tronçon de rail 38 de guidage comporte ici une unique attache 82 rapide, tandis que la platine 36 de support du guide 72 buvant présente ici deux attaches 82 rapides agencées chacun à une extrémité longitudinale de la platine 36 de support.

Selon l'exemple non limitatif représenté à la figure 11, les attaches 82 rapides sont formées par des moyens d'emboîtement axial munis d'un mécanisme de verrouillage à billes. Les attaches 82 rapides comportent une première partie qui est portée par la platine 36 de support et une deuxième partie qui est portée par le bâti 26.

La première partie de l'attache 82 rapide comporte un manchon 84 d'axe vertical "B" qui forme un élément femelle d'emboîtement. Le manchon 84 est fixé sur une face 86 supérieure de la platine 36 de support. Le manchon 84 forme avantageusement une poignée pour permettre de faciliter la manutention et la mise en position des éléments de guidage sur le bâti 26.

Le manchon 84 présente un orifice 88 central qui est agencé en coïncidence avec un orifice 90 de la platine 36 de support. Le bâti 26 comporte une broche 92 d'axe vertical qui fait saillie verticalement vers le haut par rapport à l'emplacement 37 de référence. La broche 92 forme un élément mâle qui est destiné à être emboîté verticalement dans l'orifice 88 central du manchon 84 en passant par l'orifice 90 de la platine 36 de support lorsque cette dernière est posée sur l'emplacement 37 de référence.

Cet emboîtement est ajusté de manière à permettre d'immobiliser radialement dans toutes les directions la platine 36 de support par rapport au bâti 26, en autorisant toutefois le coulissement vertical de la platine 36 de support.

Pour permettre de verrouiller verticalement le manchon 84 en position emboîtée avec la broche 92, le manchon 84 est équipé de billes 94 de verrouillage qui sont reçues mobiles radialement dans des logements 96 réalisés dans la paroi cylindrique interne qui délimite l'orifice 88 central du manchon 84. Les logements 96 sont débouchant radialement vers l'axe vertical du manchon 84. Les logements 96 sont conçus de manière à emprisonner les billes 94 tout en leur autorisant un mouvement radial entre une position de libération dans laquelle les billes 94 sont rétractés totalement dans leur logement 96 et une position de verrouillage dans laquelle les billes sont poussées radialement vers l'intérieur pour faire saillie par rapport à la paroi cylindrique de l'orifice 88 central à travers les ouvertures des logements 96.

La broche 92 comporte une gorge 98 qui reçoit les billes 94 dans leur position de verrouillage pour verrouiller le manchon 84 en position emboîtée.

Le manchon 84 comporte en outre des moyens de commande des billes qui sont formés par un poussoir 100 qui est monté coulissant verticalement dans la paroi du manchon 84. Le poussoir 100 présente une âme 102 horizontale supérieure qui comporte sur sa face supérieure un bouton 104 central d'actionnement qui est accessible depuis le dessus du manchon 84 à la faveur d'un trou.

Des pattes 106 verticales s'étendent verticalement vers le bas depuis un bord périphérique de l'âme 102. Une extrémité inférieure libre des pattes 106 est équipée d'une rampe 108 de commande des billes 94. Ces rampes 108 sont agencées dans un fond des logements 96. Lorsque le poussoir est commandé dans une position supérieure, les billes 94 sont contraintes par les rampes 108 vers leur position de verrouillage, tandis que lorsque le poussoir 100 est commandé vers une position inférieure, les rampes 108 autorisent un coulissement des billes 94 vers leur position de libération.

Le poussoir 100 est ici rappelé vers sa position supérieure de verrouillage par un organe 110 élastique qui est interposé verticalement entre une face du manchon 84 et l'extrémité inférieure des pattes 106. Le bouton 104 du poussoir 100 doit être actionné pour commander les billes 94 dans leur position de libération.

Selon une variante non représentée de l'invention, la broche est portée par la platine de support, tandis que le manchon est porté par le bâti.

Selon encore une autre variante de l'invention, le mécanisme de verrouillage à billes est porté par la broche au lieu d'être porté par le manchon.

Selon une autre variante de l'invention, les billes peuvent être remplacées par d'autres éléments de verrouillage tels que des goupilles.

Selon une variante non représentée de l'invention, les attaches rapides sont formées par des mécanismes de genouillère.

Lors de l'utilisation de la glissière 16 de défilement pour la première fois avec un nouveau modèle de préforme 18 qui est susceptible d'être traité de manière récurrente, les rails 38 de guidage et le guide 72 buvant sont fixés au bâti 26 par l'intermédiaire des platines 36 de support associées par les attaches 82 rapides. L'emboîtement axial des attaches rapides est symbolisé par les lignes verticales en pointillés des figures 4 et 9.

La position des différents éléments de guidage, notamment le guide 40 sous col, le guide 52 corps, le guide 62 col et le guide 72 buvant, ensuite réglée par rapport aux platines 36 de support afin d'adapter les dimensions de la fente 27 au format de la préforme 18. Ainsi, les guide 40 sous col sont réglés transversalement pour que la fente 27 réservée entre eux présente une dimension transversale légèrement supérieure au diamètre "D2" sous col de la préforme 18. Puis, les guide 52 corps sont réglés pour adapter la largeur de la fente 27 au diamètre "D3" du corps 20 des préformes 18. Les guides 62 col sont aussi réglés en position pour adapter leur espacement transversal en fonction du diamètre "D1" externe de la collerette 24 de la préforme 18. Enfin, le guide 72 buvant est aussi réglé en position verticale et longitudinale au-dessus des rails 38 de guidage en fonction de la hauteur "H" du col 22 de la préforme 18.

Lorsque chaque élément de guidage est réglé en position, il est bloqué dans sa position réglé par serrage des vis de serrage ou des écrous de serrage correspondant.

Etant donné que cette opération est destinée à être réalisée une seule fois, les vis de serrage et les écrous comportent une empreinte de coopération avec une clé de réglage. Ainsi, l'opération de réglage nécessite ici l'usage d'un outil. Cependant, en variante, les vis de serrage comportent des poignées pour permettre un serrage manuel sans outil.

Lorsqu'on souhaite changer de format de préforme 18, les tronçons de rail 38 de guidage et le guide 72 buvant sont démontés du bâti 26 par l'intermédiaire des attaches 82 rapides. Les moyens de fixation réglables ne sont pas desserrés. Les éléments de guidage précités demeurent en position réglées par rapport aux platines 36 de support. Les éléments de guidage sont stockés dans leur position réglée adaptée audit format de préforme jusqu'à la prochaine utilisation dudit format de préforme 18.

Lorsque ledit format de préforme 18 est à nouveau traité, les éléments de guidage sont à nouveau montés sur le bâti 26 par l'intermédiaire des platines 36 de support grâce aux attaches 82 rapides. Les éléments de guidage sont ainsi déjà réglés pour ledit format de préforme 18. Il n'est donc pas nécessaire de réaliser à nouveau l'opération de réglage.

De plus, l'utilisation d'attaches 82 rapides pour la fixation des platines 36 de support sur le bâti 26 permet de réaliser le remplacement des éléments de guidage de manière extrêmement rapide.

En outre, le découpage de chaque rail 38 de guidage en tronçons indépendant permet de faciliter la manutention des éléments de guidage lors de changement de format de préforme 18.

## Revendications

1. Dispositif (10) d'alimentation de préformes (18), notamment de préformes en matériau thermoplastique destinées à être conformées en récipients, adapté pour des préformes (18) comportant une collerette (24), le dispositif (10) comportant une glissière (16) de défilement des préformes (18) comportant deux chemins (34) de glissement destiné à supporter les préformes (18) debout par leur collerette (24), la glissière (16) comportant :
- un bâti (26) fixe ;
- des éléments de guidage des préformes (18) montés réglables en position sur le bâti (26) pour être adaptés à différents formats de préforme (18) ;
**caractérisé en ce que** les éléments de guidage sont montés réglables sur le bâti par l'intermédiaire de platines (36) de support associées, les platines (36) de support étant fixées dans une position de référence sur le bâti (26) par des moyens de fixation démontables pour permettre de détacher les éléments de guidage du bâti (26) par démontage des platines (36) de support tout en conservant leur réglage en position par rapport aux platines (36) de support.

2. Dispositif (10) selon la revendication précédente, **caractérisé en ce que** les moyens de fixation démontables des platines (36) de support sur le bâti (26) sont formés par des attaches (82) rapides.

3. Dispositif (10) selon la revendication précédente, **caractérisé en ce que** la glissière (16) comporte une fente (27) délimitée transversalement par deux rails (38) parallèles de guidage, chaque rail (38) de guidage comportant un guide (40) sous col, formant l'un desdits éléments de guidage, qui comporte un des chemins (34) de glissement, le guide (40) sous col étant monté réglable transversalement sur la platine (36) de support par l'intermédiaire de premiers moyens de fixation réglables.

4. Dispositif (10) selon la revendication précédente, **caractérisé en ce que** chaque rail (38) de guidage comporte un guide (52) corps, formant l'un desdits éléments de guidage, qui est agencé sous le guide (40) sous col pour guider un corps (20) des préformes (18) et qui est monté réglable transversalement sur le guide (40) sous col par l'intermédiaire de deuxièmes moyens de fixation réglables.

5. Dispositif (10) l'une quelconque des revendications 3 ou 4, **caractérisé en ce que** chaque rail (38) de guidage comporte un guide (62) col, formant l'un desdits éléments de guidage, qui est agencé sur le guide (40) sous col pour guider un col (22) des préformes (18) et qui est monté réglable transversalement sur le guide (40) sous col par l'intermédiaire de troisièmes moyens de fixation.

6. Dispositif (10) selon l'une quelconque des revendications 2 à 5, **caractérisé en ce que** le dispositif (10) comporte aussi au moins un guide (72) buvant, formant l'un desdits éléments de guidage, qui est agencée au droit de la glissière (16) pour maintenir les préformes (18) debout dans la glissière (16), le guide (72) buvant étant montée réglable verticalement sur des platines (36) de support par l'intermédiaire de quatrièmes moyens de fixation réglables, les platines (36) de support étant fixées dans une position de référence sur le bâti (26) au moyen d'attaches (82) rapides.

7. Dispositif (10) selon l'une quelconque des revendications 2 à 6, **caractérisé en ce que** les attaches (82) rapides sont formées par emboîtement d'éléments de forme complémentaire comportant un mécanisme de verrouillage à billes (94).

8. Dispositif (10) selon la revendication précédente, **caractérisé en ce que** le mécanisme de verrouillage à billes comporte un poussoir (100) de déverrouillage.

9. Dispositif (10) selon l'une quelconque des revendications 2 à 7, **caractérisé en ce que** les attaches (82) rapides sont formées par des mécanismes de genouillère.

10. Dispositif (10) selon l'une quelconque des revendications 2 à 9, **caractérisé en ce que** au moins un des moyens de fixation réglables est formé par une vis (44, 58, 68) de serrage reçue dans une lumière (46, 60, 70) de réglage, la vis (44, 58, 68) de serrage comportant une empreinte de coopération avec une clé de réglage.

11. Dispositif (10) selon l'une quelconque des revendications 2 à 10, **caractérisé en ce que** chaque rail (38) de guidage est formé de plusieurs tronçons (38A, 38B, 38C, 38D, 38E) indépendants qui sont chacun portés par des platines (36) de support associées.

## Patentansprüche

1. Vorrichtung (10) zur Zuführung von Vorformlingen (18), insbesondere Vorformlingen aus thermoplastischem Material zur Ausbildung als Behälter, die für Vorformlinge (18) mit einem Kragen (24) geeignet ist, wobei die Vorrichtung (10) eine Gleiteinrichtung (16) zum Durchlauf der Vorformlinge (18) mit zwei Gleitbahnen (34) aufweist, die dazu bestimmt sind, die Vorformlinge (18) aufrecht an ihrem Kragen (24) zu tragen, die Gleiteinrichtung (16) aufweisend:
- ein festes Gestell (26);
- Elemente zur Führung der Vorformlinge (18), die in der Position verstellbar am Gestell (26) angebracht sind, um an verschiedene Formate von Vorformlingen (18) angepasst zu werden;
**dadurch gekennzeichnet, dass** die Führungselemente mittels zugehöriger Trägerplatten (36) verstellbar am Gestell angebracht sind, wobei die Trägerplatten (36) durch abnehmbare Befestigungsmittel in einer Referenzposition am Gestell (26) befestigt sind, um es zu ermöglichen, die Führungselemente durch Demontage der Trägerplatten (36) vom Gestell (26) zu lösen, wobei ihre Positionseinstellung im Verhältnis zu den Trägerplatten (36) beibehalten wird.

2. Vorrichtung (10) nach dem vorhergehenden Anspruch, **dadurch gekennzeichnet, dass** die abnehmbaren Befestigungsmittel der Trägerplatten (36) am Gestell (26) von Schnellverschlüssen (82) gebildet sind.

3. Vorrichtung (10) nach dem vorhergehenden Anspruch, **dadurch gekennzeichnet, dass** die Gleiteinrichtung (16) einen Spalt (27) aufweist, der in Querrichtung von zwei parallelen Führungsschienen (38) begrenzt ist, wobei jede Führungsschiene (38) eine Unterhals-Führung (40) aufweist, die eins der Führungselemente bildet, die eine der Gleitbahnen (34) aufweist, wobei die Unterhals-Führung (40) mittels erster verstellbarer Befestigungsmittel in Querrichtung verstellbar an der Trägerplatte (36) angebracht ist.

4. Vorrichtung (10) nach dem vorhergehenden Anspruch, **dadurch gekennzeichnet, dass** jede Führungsschiene (38) eine Körperführung (52) aufweist, die eins der Führungselemente bildet, die unter der Unterhals-Führung (40) angeordnet ist, um einen Körper (20) der Vorformlinge (18) zu führen, und die mittels zweiter verstellbarer Befestigungsmittel in Querrichtung verstellbar an der Unterhals-Führung (40) angebracht ist.

5. Vorrichtung (10) nach einem der Ansprüche 3 oder 4, **dadurch gekennzeichnet, dass** jede Führungsschiene (38) eine Halsführung (62) aufweist, die eins der Führungselemente bildet, die auf der Unterhals-Führung (40) angeordnet ist, um einen Hals (22) der Vorformlinge (18) zu führen, und die mittels dritter Befestigungsmittel in Querrichtung verstellbar auf der Unterhals-Führung (40) angebracht ist.

6. Vorrichtung (10) nach einem der Ansprüche 2 bis 5, **dadurch gekennzeichnet, dass** die Vorrichtung (10) auch wenigstens eine Mündungsrand-Führung (72) aufweist, die eins der Führungselemente bildet, die an der Gleiteinrichtung (16) angeordnet ist, um die Vorformlinge (18) aufrecht in der Gleiteinrichtung (16) zu halten, wobei die Mündungsrand-Führung (72) mittels vierter verstellbarer Befestigungsmittel senkrecht verstellbar an den Trägerplatten (36) angebracht ist, wobei die Trägerplatten (36) mittels Schnellverschlüssen (82) in einer Referenzposition am Gestell (26) befestigt sind.

7. Vorrichtung (10) nach einem der Ansprüche 2 bis 6, **dadurch gekennzeichnet, dass** die Schnellverschlüsse (82) durch Zusammenstecken von Elementen komplementärer Form gebildet sind, die einen Kugelverriegelungsmechanismus (94) aufweisen.

8. Vorrichtung (10) nach dem vorhergehenden Anspruch, **dadurch gekennzeichnet, dass** der Kugelverriegelungsmechanismus einen Entriegelungsdrücker (100) aufweist.

9. Vorrichtung (10) nach einem der Ansprüche 2 bis 7, **dadurch gekennzeichnet, dass** die Schnellverschlüsse (82) von Kugelgelenkmechanismen gebildet sind.

10. Vorrichtung (10) nach einem der Ansprüche 2 bis 9, **dadurch gekennzeichnet, dass** wenigstens eins der verstellbaren Befestigungsmittel von einer Feststellschraube (44, 58, 68) gebildet ist, die in einer Verstellöffnung (46, 60, 70) aufgenommen ist, wobei die Feststellschraube (44, 58, 68) eine Vertiefung zur Zusammenwirkung mit einem Verstellschlüssel aufweist.

11. Vorrichtung (10) nach einem der Ansprüche 2 bis 10, **dadurch gekennzeichnet, dass** jede Führungsschiene (38) von mehreren unabhängigen Teilstücken (38A, 38B, 38C, 38D, 38E) gebildet ist, die jeweils von zugehörigen Trägerplatten (36) getragen werden.

## Claims

1. Device (10) for supplying preforms (18), in particular preforms made of thermoplastic material intended to be shaped into containers, suitable for preforms (18) comprising a collar (24), the device (10) comprising a file-forming slide (16) for the preforms (18), comprising two sliding tracks (34) intended to support the preforms (18) upright by their collar (24), the slide (16) comprising:
- a fixed frame (26);
- elements for guiding the preforms (18), which elements are mounted so as to be adjustable in terms of position on the frame (26) so as to be adapted to different formats of preform (18);
**characterized in that** the guiding elements are mounted so as to be adjustable on the frame by means of associated support plates (36), the support plates (36) being fixed in a reference position on the frame (26) by removable fastening means in order that the guiding elements can be detached from the frame (26) by removing the support plates (36) while keeping their adjustment in terms of position relative to the support plates (36).

2. Device (10) according to the preceding claim, **characterized in that** the means for removable fastening of the support plates (36) on the frame (26) consist of quick-release fasteners (82).

3. Device (10) according to the preceding claim, **characterized in that** the slide (16) comprises a slot (27) bounded transversely by two parallel guiding rails (38), each guiding rail (38) comprising an under-neck guide (40), forming one of said guiding elements, which comprises one of the tracks (34) for sliding, the under-neck guide (40) being mounted so as to be adjustable transversely on the support plate (36) by means of first adjustable fastening means.

4. Device (10) according to the preceding claim, **characterized in that** each guiding rail (38) comprises a body guide (52), forming one of said guiding elements, which is arranged below the under-neck guide (40) in order to guide a body (20) of the preforms (18) and which is mounted so as to be adjustable transversely on the under-neck guide (40) by means of second adjustable fastening means.

5. Device (10) according to either one of Claims 3 and 4, **characterized in that** each guiding rail (38) comprises a neck guide (62), forming one of said guiding elements, which is arranged on the under-neck guide (40) in order to guide a neck (22) of the preforms (18) and which is mounted so as to be adjustable transversely on the under-neck guide (40) by means of third fastening means.

6. Device (10) according to any one of Claims 2 to 5, **characterized in that** the device (10) also comprises at least one lip guide (72), forming one of said guiding elements, which is arranged in line with the slide (16) in order to hold the preforms (18) upright in the slide (16), the lip guide (72) being mounted so as to be adjustable vertically on support plates (36) by means of fourth adjustable fastening means, the support plates (36) being fastened in a reference position on the frame (26) by means of quick-release fasteners (82).

7. Device (10) according to any one of Claims 2 to 6, **characterized in that** the quick-release fasteners (82) are formed by nesting of complementary-shaped elements, comprising a ball locking mechanism (94).

8. Device (10) according to the preceding claim, **characterized in that** the ball locking mechanism comprises a pusher (100) for unlocking.

9. Device (10) according to any one of Claims 2 to 7, **characterized in that** the quick-release fasteners (82) are formed by ball-and-socket mechanisms.

10. Device (10) according to any one of Claims 2 to 9, **characterized in that** at least one of the adjustable fastening means is formed by a clamping screw (44, 58, 68) received in an adjustment port (46, 60, 70), the clamping screw (44, 58, 68) comprising an imprint for cooperating with an adjustment key.

11. Device (10) according to any one of Claims 2 to 10, **characterized in that** each guiding rail (38) is formed of multiple independent segments (38A, 38B, 38C, 38D, 38E) which are each borne by associated support plates (36) .
